# EUROPEAN PATENT SPECIFICATION

(11) **EP 0 577 541 B1**
(45) Date of publication and mention of the grant of the patent: **23.10.1996**
(21) Application number: 93610040.3
(22) Date of filing: 23.06.1993
(51) Int. Cl.: F16H 25/22, H02K 7/06

(54) **Linear actuator**
Linearer Stellantrieb
Actionneur linéaire

(30) Priority: 30.06.1992 DK 862/92
(43) Date of publication of application: 05.01.1994
(73) Proprietor: LINAK A/S, DK-6430 Nordborg (DK)
(72) Inventor: Hansen, Erik, DK-6400 Sonderborg (DK); Jensen, Bent, DK-6430 Nordborg (DK)
(74) Representative: Pedersen, Soeren Skovgaard

(56) References cited:
- GB-A- 587 647
- US-A- 2 520 005
- US-A- 2 541 529
- US-A- 3 640 140
- US-A- 3 662 612

## Description

The invention relates to a linear actuator comprising a threaded spindle rotatable in either direction, a threaded bushing that drives an output rod and a reversible motor that drives the spindle via a power transmission and means to disengage the drive connection as defined by the features of the preamble of the independent claim. Such an actuator is known from US-A 2 541 529.

Linear actuators of the type mentioned above are used for a multitude of operations where a linear movement or power actuation is desired. They are often used where a hydraulic or pneumatic installation would be totally unsuitable and where an electric driving power is to be preferred. Electrically operated doors and hospital beds may be mentioned as examples where the linear actuator is positioned such that the output rod performs the required movement from one position to another as a result of a power supply of one or the other polarity and possibly guided by limit stops. A typical construction of a further linear actuator (but without motor) is shown in US-A 2 729 113.

In practical use a desire to arrive from one extreme position to the other at great speed may arise, or to arrive from a given position to one of the extreme positions or in general to be able to effect an adjustment of the moved unit without being bound to the mechanism of the linear actuator. Doors may be required to close rapidly like fire doors due to the release of safety devices caused by excessive temperatures or a normally closed door must serve as an emergency exit even in the case of a power supply failure. In a hospital bed it might be desirable to achieve a totally horizontal position quickly despite the head of the bed having been raised. In those cases where a power supply is based on batteries, the power transmission will have a high ratio, and it will consequently be relatively slow. The same will apply for linear actuators that must perform a heavy pulling or pushing force by means of the output rod. Prior art solutions to this return problem have been based on toggle link mechanisms that may be released or on locking pins that may be pulled out such that the output rod no longer acts as a bar against movement. These prior art solutions are such that the linear actuator may not be brought back to its normal function again until the moved unit has been returned to its pre-released position upon which the releasing mechanism can be reset, for instance by inserting the pulled-out locking pin. Furthermore mechanisms of the type mentioned may not allow passage from one position of the shifted element to another without interaction with the linear actuator and its subsequent random engagement.

The object of the invention is to further develop the generic actuator. This is achieved by a linear actuator having the features as outlined in the independent claim.

The invention shall be described in further detail referring to the drawing in which:-
Fig. 1 illustrates a longitudinal section through a linear actuator by means of which the invention may be carried into effect, and
Fig. 2 illustrates an embodiment of the invention.

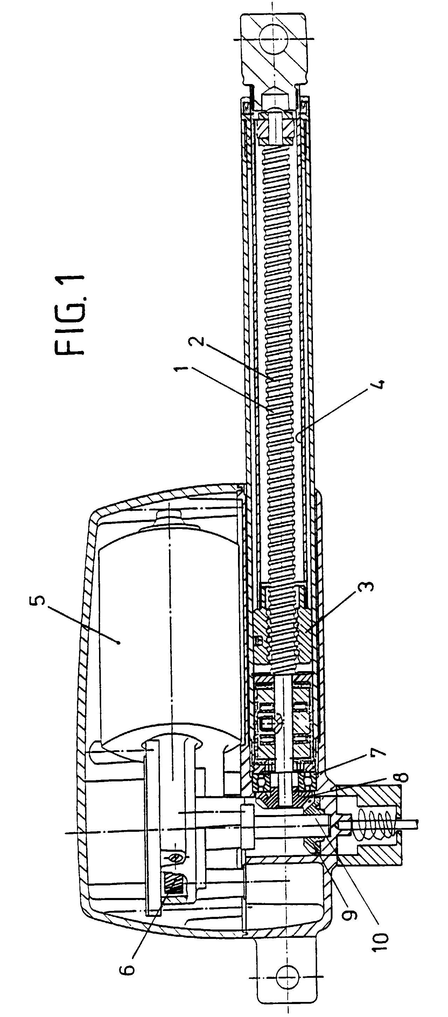

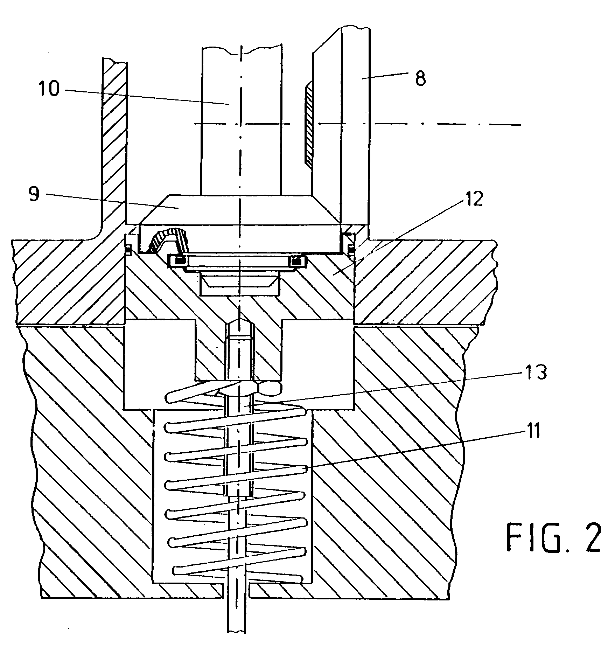

In Fig. 1 is seen a linear actuator having a spindle 1 rotatable in either direction with a thread 2, a threaded bushing 3 that drives an output rod and a reversible motor 5 that via a power transmission 6 drives the spindle 1. The spindle is carried by bearings 7 that are suited to absorbing axial forces while allowing the spindle to rotate freely. At one end the spindle has a bevel gear 8 being in engagement with another bevel gear 9 having its shaft perpendicularly to the spindle. The rotation of the motor 5 is converted by the power transmission 6 as well as by the bevel gears 9 and 8 to a slow rotation of the spindle 1 having a large torque, and as the threaded bushing 3 is prevented from taking part in the rotation of the spindle it will move the output rod (4) inwardly or outwardly by a heavy force. When the motor is not energized, an attempt at rotation of the output rod of the power transmission will fail as the inner friction will prevent the rotation of the motor shaft as the transmission ratio now is reciprocal. From spindle jacks it is known that the thread pitch of the spindle can be so small that the thread is self-locking, but the invention is effected when the threaded bushing can move (rotate) by a force on the output rod. However, the motor acts as a block as mentioned above. If the connection between the spindle and power transmission can be disconnected, a force on the output rod can bring it into any desired position. According to the invention this may take place at any position between the power transmission and the spindle or in the last gears of the power transmission, and in Fig. 2 is shown an embodiment of the invention according to claim 3, where the bevel gear 9 can be pulled out of its engagement with the bevel gear 8. All it takes is that the output shaft 10 of the transmission associated to the motor allows an axial displacement of the gear 9 along this rod. As shown the gear 9 is in engagement and this must be considered the normal working position where the spring 11 by a pressure on the axial bearing 12 of the gear establishes a safe engagement. In this position the movement and position of the output rod are entirely defined by the motor and its power supply and an interruption of the power would cause a locking of the position. If a release of the axial actuator has to take place the gear 9 is pulled out overcoming the spring tension by applying a pull to the linkage 13. By this the output rod can be moved almost freely as the spindle is put into rotation having a direction of rotation depending on the direction of force. When the desired disengagement has allowed the required adjustments, the linear actuator may be connected again simply by discontinuing the pull of the linkage 13 and because the gears 8 and 9 have many gear teeth the engagement will be performed rapidly.

A multitude of variations of the idea of the invention may be imagined because it is effected whenever the mechanical driving or retaining connection between the motor and the spindle is disconnected. This may be done as in the shown embodiment and in a manner saving on materials and components, but a conventional claw connection is feasible in a suitable position and it may be replaced without further interfering with the power transmission.

## Claims

1. A linear actuator comprising a threaded spindle (1) rotatable in either direction, a threaded bushing (3) that drives an output rod (4), a reversible motor (5) that drives the spindle via a power transmission (6), wherein the threaded bushing (3) is not self-locking on the spindle, wherein two gears (8,9) are arranged on shafts the axis of which are perpendicular to one another, one gear (9) thereof is arranged on its shaft to move axially thereon and to rotate therewith, said one gear (9) is held in meshing engagement with the other gear (8) by means of a spring (11), the other gear (8) is fixed to its shaft to rotate therewith, and means are provided to disconnect the meshing engagement of the two gears,
**characterized in that**
the two gears are bevel gears (8, 9) of an additional gear transmission, the movable bevel gear (9) is arranged on a shaft (10) receiving power from said power transmission (6) and the other bevel gear (8) is fixed to said threaded spindle (1), said disconnecting means comprise a linkage (13) coupled to said movable bevel gear (9) so that said movable bevel gear (9) can be pulled out of engagement with the fixed bevel gear (8).

## Patentansprüche

1. Ein linearer Stellenantrieb, umfassend eine in jeder Richtung rotierbare Gewindespindel (1), eine mit Gewinde versehene Buchse (3), die eine Abtriebstange (4) antreibt, einen Reversiermotor (5), der die Spindel über eine Kraftübertragung (6) antreibt, wobei sich die mit Gewinde versehene Buchse (3) nicht-selbsthaltend auf der Spindel befindet, zwei Zahnräder (8,9) auf Wellen angeordnet sind, deren Achsen senkrecht zueinander sind, eines der Zahnräder (9) auf seiner Welle axial bewegbar und mit ihr rotierend angeordnet ist, das eine Zahnrad (9) im Zahneingriff mit dem anderen Zahnrad (8) mittels einer Feder (11) gehalten ist, während das andere Zahnrad (8) mit seiner Welle fest zum Rotieren mit ihr befestigt ist, und Mittel vorgesehen sind, um den Zahneingriff der beiden Zahnräder zu lösen,
**dadurch gekennzeichnet**,
daß die zwei Zahnräder Kegelzahnräder eines zusätzlichen Zahnradgetriebes sind, das bewegliche Kegelzahnrad (9) auf der Welle (10) angeordnet ist sowie die Kraft von der Kraftübertragung (6) aufnimmt und das andere Kegelzahnrad (8) an der Gewindespindel (1) betestigt ist, wobei die Mittel zum Lösen eine Verbindung (13) umfassen, die an das bewegliche Kegelzahnrad (9) derart gekoppelt ist, daß das bewegliche Kegelzahnrad (9) außer Eingriff gegenüber dem feststehenden Kegelzahnrad (8) gezogen werden kann.

## Revendications

1. Actionneur linéaire comprenant une broche filetée (1) rotative dans les deux sens, une bague taraudée (3) qui entraîne une tige de sortie (4), un moteur réversible (5) qui entraîne la broche via une transmission de puissance (6), dans lequel la bague taraudée (3) n'est pas auto-verrouillée sur la broche, dans lequel deux pignons (8,9) sont agencés sur des arbres dont les axes sont perpendiculaires l'un par rapport à l'autre, un pignon (9) de ceux-ci est agencé sur son arbre pour se déplacer axialement sur celui-ci et pour tourner avec lui, ledit pignon (9) est maintenu en engagement d'engrènement avec l'autre pignon (8) par l'intermédiaire d'un ressort (11), l'autre pignon (8) est fixé sur son arbre pour tourner avec lui, et des moyens sont prévus pour déconnecter l'engagement par engrènement des deux pignons,
caractérisé en ce que les deux pignons sont des pignons coniques (8,9) d'une transmission par engrenage additionnelle, le pignon conique mobile (9) est agencé sur un arbre (10) recevant la puissance de ladite transmission de puissance (6), et l'autre pignon conique (8) est fixé à ladite broche filetée (1), lesdits moyens de déconnexion comprennent une liaison (13) couplée audit pignon conique mobile (9), de sorte que ledit pignon conique mobile (9) peut être désengagé du pignon conique fixe (8).
